(19) Europäisches Patentamt
European Patent Office
Office européen des brevets

(11) **EP 4 540 675 B1**

(12) **EUROPEAN PATENT SPECIFICATION**

(45) Date of publication and mention
of the grant of the patent:
**08.04.2026 Bulletin 2026/15**

(21) Application number: **23735360.2**

(22) Date of filing: **16.06.2023**

(51) International Patent Classification (IPC):
**G05D 1/00** $^{(2024.01)}$ **B60W 60/00** $^{(2020.01)}$

(52) Cooperative Patent Classification (CPC):
**G05D 1/0214; B60W 60/001; B60W 2556/45**

(86) International application number:
**PCT/GB2023/051579**

(87) International publication number:
**WO 2023/242586 (21.12.2023 Gazette 2023/51)**

(54) **A CONTROL SYSTEM AND METHOD**

STEUERUNGSSYSTEM UND -VERFAHREN

SYSTÈME ET PROCÉDÉ DE COMMANDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.06.2022 GB 202208966**

(43) Date of publication of application:
**23.04.2025 Bulletin 2025/17**

(73) Proprietor: **Horiba Mira Limited
Nuneaton, Warwickshire CV10 0TU (GB)**

(72) Inventor: **BLACHFORD, Richard
Smethwick West Midlands B66 4ST (GB)**

(74) Representative: **Forresters IP LLP
Skygarden
Erika-Mann-Straße 11
80636 München (DE)**

(56) References cited:
**CN-A- 111 459 160     JP-A- 2011 145 797
US-A1- 2020 033 871**

**Description**

<u>FIELD</u>

The present technology relates to a control system and method which can be used for controlling the movement of a vehicle. The present technology may, therefore, control the movement of an autonomous vehicle (e.g. self-driving car).

<u>BACKGROUND</u>

Autonomous vehicles, particularly self-driving cars, are at the forefront of the automotive revolution.

It is important to ensure that autonomous vehicles behave in a manner that is both safe and comfortable for human passengers and nearby people. Furthermore, wear and tear on the vehicle should be minimised.

Problems with known vehicle control systems and methods include a tendency to produce jerky steering movements, particularly at low speed. This can be both dangerous and unsettling for human passengers and nearby people, and can lead to unnecessary wear and tear on the steering system.

US2020033871 discloses a vehicle control device provided with: a connection point setting unit that sets a connection point between a start point and an end point of a point sequence which indicates at least a part of positions of a travel trajectory; and an interpolation processing unit that specifies the position of the travel trajectory by interpolating a section from a trajectory starting point of the travel trajectory to the connection point by using a clothoid curve satisfying a boundary condition concerning the trajectory starting point and the connection point.

JP2011145797 discloses track generation is performed by performing interpolation in a point sequence by a clothoid curve. The track generation device includes an arithmetic processor having a clothoid curve generation means; the clothoid curve is a triple clothoid curve, and thereby, continuity of a tangent direction and continuity of curvature at a passage point are secured. When an end point is connected to a straight line, the tangent direction thereof is brought into line with a straight line direction.

CN111459160 discloses a large-scale track smoothing method for an open road unmanned cleaning sweeper truck. The method comprises the following steps: connecting a lane center line, and obtaining a large-scale original guide line track; linearly interpolating the original guide line track according to a fixed distance, establishing a kinematic model of the unmanned cleaning sweeper truck, and setting track point attributes; segmenting a guide line track with track point attributes, and opening up a smoother thread; setting an objective function of smoothing processing according to a task scene demand of the open road unmanned cleaning sweeper truck; constructing geometric constraints and kinematic model related constraints; carrying out automatic differentiation by adopting an IPOPT nonlinear optimization mode in the smoother thread and an automatic differential tool Casadi; and obtaining coordinates of all the smoothed track points, forming a smoothed track, and enabling the unmanned cleaning sweeper truck to move according to the track, thus completing the whole smoothing process.

The present technology aims to provide solutions to the problems associated with the prior art.

<u>BRIEF DESCRIPTION OF THE INVENTION</u>

Aspects of the present invention are recited by the independent claims, with the dependent claims reciting optional features.

The disclosed technology includes a method of controlling a vehicle, the method including: providing waypoint data for a series of waypoints to a path controller; using the path controller to determine interpolation point data for a series of interpolation points defining a target path for the vehicle by interpolating between the waypoints; and controlling the vehicle such that the vehicle follows the target path, wherein the waypoint data includes position data and at least one of heading data, curvature data, and/or inflection data, or wherein the waypoint data includes position data and the method includes using the path controller to determine at least one of heading data, curvature data, and/or inflection data using the waypoint data, wherein curvature data represents heading data differentiated with respect to distance travelled and inflection data represents curvature data differentiated with respect to distance travelled.

The waypoint data may include position data, heading data, curvature data, and inflection data.

The interpolation point data may include interpolation position data and at least one of interpolation heading data, interpolation curvature data, and/or interpolation inflection data.

The interpolation point data may include interpolation position data, interpolation heading data, interpolation curvature data, and interpolation inflection data.

The path controller may determine the interpolation point data using an equation of the form:

$$r(n_{par}) = r_{waypoint\ w} + r_{norm} \int_{waypoint\ w}^{waypoint\ w+1} integrand\ dn_{par}$$

where $r$ represents the position of the interpolation point, $n_{par}$ represents a parametric variable proportional to the distance travelled from the waypoint $w$ towards the waypoint $w + 1$, $r_{waypoint\ w}$ represents the position of the waypoint $w$, $r_{norm}$ represents a constant, *waypoint w* and *waypoint w* + 1 represent the waypoints being interpolated between; and *integrand* represents the integrand.

$r$ may represent the position of the interpolation point as a complex number, $r_{waypoint\ w}$ may represent the position of the waypoint w as a complex number, and $r_{norm}$ may represent a complex constant.

The path controller may determine the interpolation point data using an equation of the form:

$$r(n_{par}) = r_{waypoint\ w} + r_{norm} \int_{waypoint\ w}^{waypoint\ w+1} e^{i(polynomial)}\ dn_{par}$$

where *polynomial* represents a polynomial of the form:

$$n_{coeff,p}n_{par}^{p} + n_{coeff,p-1}n_{par}^{p-1} + \cdots + n_{coeff,1}n_{par}$$

where $n_{coeff,p} \ldots n_{coeff,1}$ represent constants and $p$ represents the degree of the polynomial.

$n_{coeff,p} \ldots n_{coeff,1}$ may represent real constants.

The degree of the polynomial may be 6.

The path controller may determine the interpolation point data using a matrix inversion technique.

The path controller may determine the interpolation point data using matrices of the general form:

$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

where each of the terms $a_1 \ldots a_x$ include $r_{norm}$, and where $A$ represents a matrix that is a function of the limits of $n_{par}$.

The path controller may determine the interpolation point data by: assigning a value to $r_{norm}$; determining the coefficients $n_{coeff,1} \ldots n_{coeff,p}$ using the inverse matrix $A^{-1}$ using matrices of the general form:

$$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

determining the heading, curvature, and inflection of each interpolation point using the determined coefficients; determining the position of each interpolation point by substituting the determined coefficients into the *polynomial;* determining the error in position between the final interpolation point and *waypoint w* + 1; and assigning a new value to $r_{norm}$ to reduce the error and repeating the process until at least one termination criterion is met.

The error in position between the final interpolation point and *waypoint w* + 1 may be determined as a complex error.

The path controller may determine the interpolation point data using matrices of the general form:

$$\begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w + 1) - (angle\ of\ r_{norm}) \\ (curvature\ at\ w + 1) \times (modulus\ of\ r_{norm}) \\ (inflection\ at\ w + 1) \times (modulus\ of\ r_{norm})^2 \end{bmatrix} = A \begin{bmatrix} n_{coeff,1} \\ n_{coeff,2} \\ n_{coeff,3} \\ n_{coeff,4} \\ n_{coeff,5} \\ n_{coeff,6} \end{bmatrix}$$

The path controller may determine the interpolation point data by: assigning a value to $r_{norm}$; determining the coefficients $n_{coeff,1} \ldots n_{coeff,p}$ using the inverse matrix $A^{-1}$ using matrices of the general form:

$$\begin{bmatrix} n_{coeff,1} \\ n_{coeff,2} \\ n_{coeff,3} \\ n_{coeff,4} \\ n_{coeff,5} \\ n_{coeff,6} \end{bmatrix} = A^{-1} \begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w + 1) - (angle\ of\ r_{norm}) \\ (curvature\ at\ w + 1) \times (modulus\ of\ r_{norm}) \\ (inflection\ at\ w + 1) \times (modulus\ of\ r_{norm})^2 \end{bmatrix}$$

determining the heading, curvature, and inflection of each interpolation point using the determined coefficients; determining the position of each interpolation point by substituting the determined coefficients into the *polynomial;* determining the error in position between the final interpolation point and *waypoint w* + 1; and assigning a new value to $r_{norm}$ to reduce the error and repeating the process until a termination criterion is met.

The error in position between the final interpolation point and *waypoint w* + 1 may be determined as a complex error.

The termination criterion may include a predetermined number of repetitions.

The disclosed technology also includes a system for controlling a vehicle, the system including: a non-transitory computer-readable storage medium; and a path controller operably coupled to the storage medium, wherein the path controller is configured to obtain waypoint data for a series of waypoints from the storage medium and to determine interpolation point data for a series of interpolation points defining a target path for the vehicle by interpolating between the waypoints, wherein the path controller is configured to control the vehicle such that the vehicle follows the target path, wherein the waypoint data includes position data and at least one of heading data, curvature data, and/or inflection data, or wherein the waypoint data includes position data and the method includes using the path controller to determine at least one of heading data, curvature data, and/or inflection data using the waypoint data wherein the curvature data represents heading data differentiated with respect to distance travelled and the inflection data represents curvature data differentiated with respect to distance travelled.

The waypoint data may include position data, heading data, curvature data, and inflection data.

The interpolation point data may include interpolation position data and at least one of interpolation heading data, interpolation curvature data, and/or interpolation inflection data.

The interpolation point data may include interpolation position data, interpolation heading data, interpolation curvature data, and interpolation inflection data.

The path controller may be configured to determine the interpolation point data using an equation of the form:

$$r(n_{par}) = r_{waypoint\ w} + r_{norm} \int_{waypoint\ w}^{waypoint\ w+1} integrand\ dn_{par}$$

where *r* represents the position of the interpolation point, $n_{par}$ represents a parametric variable proportional to the distance travelled from the waypoint w towards the waypoint *w* + 1, $r_{waypoint\ w}$ represents the position of the waypoint *w*, $r_{norm}$ represents a constant, *waypoint w* and *waypoint w* + 1 represent the waypoints being interpolated between; and *integrand* represents the integrand.

*r* may represent the position of the interpolation point as a complex number, $r_{waypoint\ w}$ may represent the position of the waypoint *w* as a complex number, and $r_{norm}$ may represent a complex constant.

The path controller may be configured to determine the interpolation point data using an equation of the form:

$$r(n_{par}) = r_{waypoint\ w} + r_{norm} \int_{waypoint\ w}^{waypoint\ w+1} e^{i(polynomial)}\ dn_{par}$$

where *polynomial* represents a polynomial of the form:

$$n_{coeff,p} n_{par}{}^{p} + n_{coeff,p-1} n_{par}{}^{p-1} + \cdots + n_{coeff,1} n_{par}$$

where $n_{coeff,p} \ldots n_{coeff,1}$ represent constants and $p$ represents the degree of the polynomial.

$n_{coeff,p} \ldots n_{coeff,1}$ may represent real constants.

The degree of the polynomial may be 6.

The path controller may be configured to determine the interpolation point data using a matrix inversion technique.

The path controller may be configured to determine the interpolation point data using matrices of the general

form:

$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

where each of the terms $a_1$ ... $a_x$ include $r_{norm}$, and where $A$ represents a matrix that is a function of the limits of $n_{par}$.

The path controller may be configured to determine the interpolation point data by: assigning a value to $r_{norm}$; determining the coefficients $n_{coeff,1}$ ... $n_{coeff,p}$ using the inverse matrix $A^{-1}$ using matrices of the general form:

$$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

determining the heading, curvature, and inflection of each interpolation point using the determined coefficients; determining the position of each interpolation point by substituting the determined coefficients into the *polynomial;* determining the error in position between the final interpolation point and *waypoint w* + 1; and assigning a new value to $r_{norm}$ to reduce the error and repeating the process until at least one termination criterion is met.

The error in position between the final interpolation point and *waypoint w* + 1 may be determined as a complex error.

The path controller may be configured to determine the interpolation point data using matrices of the general form:

$$\begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w + 1) - (angle\ of\ r_{norm}) \\ (curvature\ at\ w + 1) \times (modulus\ of\ r_{norm}) \\ (inflection\ at\ w + 1) \times (modulus\ of\ r_{norm})^2 \end{bmatrix} = A \begin{bmatrix} n_{coeff,1} \\ n_{coeff,2} \\ n_{coeff,3} \\ n_{coeff,4} \\ n_{coeff,5} \\ n_{coeff,6} \end{bmatrix}$$

The path controller may be configured to determine the interpolation point data by: assigning a value to $r_{norm}$; determining the coefficients $n_{coeff,1}$ ... $n_{coeff,p}$ using the inverse matrix $A^{-1}$ using matrices of the general form:

$$\begin{bmatrix} n_{coeff,1} \\ n_{coeff,2} \\ n_{coeff,3} \\ n_{coeff,4} \\ n_{coeff,5} \\ n_{coeff,6} \end{bmatrix} = A^{-1} \begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w + 1) - (angle\ of\ r_{norm}) \\ (curvature\ at\ w + 1) \times (modulus\ of\ r_{norm}) \\ (inflection\ at\ w + 1) \times (modulus\ of\ r_{norm})^2 \end{bmatrix}$$

determining the heading, curvature, and inflection of each interpolation point using the determined coefficients; determining the position of each interpolation point by substituting the determined coefficients into the *polynomial;* determining the error in position between the final interpolation point and *waypoint w* + 1; and assigning a new value to $r_{norm}$ to reduce the error and repeating the process until a termination criterion is met.

The error in position between the final interpolation point and *waypoint w* + 1 may be determined as a complex error.

The termination criterion may include a predetermined number of repetitions.

The disclosed technology also includes a computer program product or computer-readable storage medium comprising instructions which, when executed by a computer, cause the computer to carry out the above method.

The disclosed technology also includes a method of generating a map, the method comprising: generating, using a processor, waypoint data for a series of waypoints; determining, using a processor, interpolation point data for a series of interpolation points defining a target path by interpolating between the waypoints; and storing the target path in a computer-readable non-transitory storage medium, wherein the waypoint data includes position data and at least one of heading data, curvature data, and/or inflection data, wherein curvature data represents heading data differentiated with respect to distance travelled and inflection data represents curvature data differentiated with respect to distance travelled.

The map may be a map for an autonomous vehicle and the target path may be a target path for the vehicle.

BRIEF DESCRIPTION OF THE FIGURES

In order that the present disclosure may be more readily understood, preferable embodiments thereof will now be described, by way of example only, with reference to the accompanying drawings, in which:

Fig. 1 is a schematic illustration of a vehicle;
Fig. 2 is a schematic illustration of an on-board computer system;
Fig. 3 is a schematic illustration of a remote device;
Fig. 4 is a schematic illustration of a target path; and
Figs. 5a-d show schematic illustrations of an error correction technique.

DETAILED DESCRIPTION OF THE DISCLOSURE

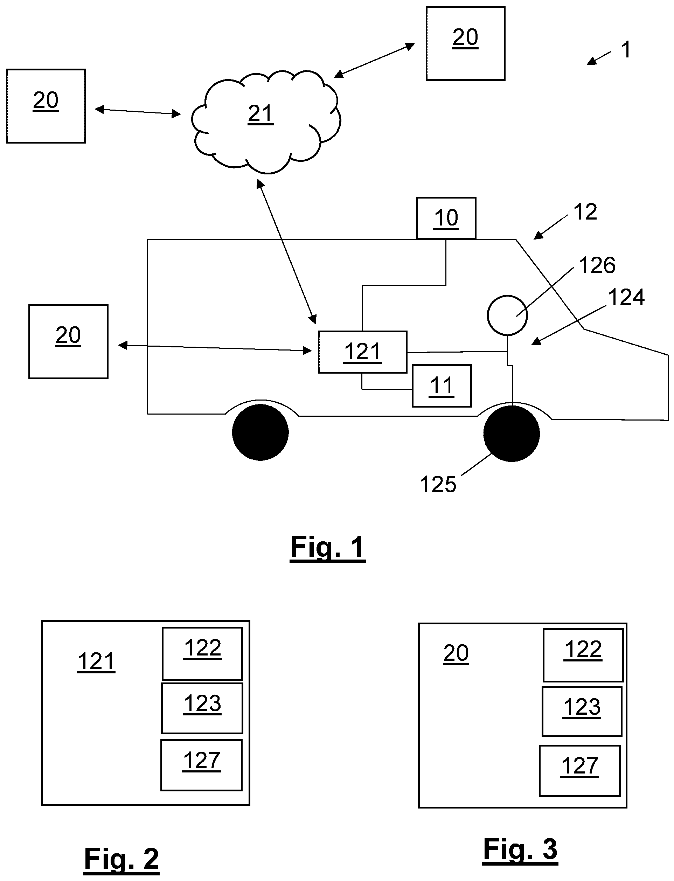

The disclosed technology includes a control system 1 and method, which may be used to control a vehicle 12.
The vehicle 12 may be any kind of vehicle including but not limited to land-based vehicles (e.g. cars, trucks, lorries, motorcycles, heavy plant machinery etc.), water-based vehicles (e.g. ships, boats, submarines etc.) or air-based vehicles (e.g. aeroplanes, helicopters, hovercraft etc.). In some versions the vehicle 12 may be a car.
The vehicle 12 may include an on-board computer system 121. The on-board computer system 121 may include a non-transitory computer-readable storage medium 127. The on-board computer system 121 may control one or more aspects of the vehicle 12, including one or more aspects of the movement of the vehicle 12. The on-board computer system 121 may include a vehicle control module 122 such as an adaptive cruise control module, advanced driver-assistance system module, and/or autonomous driving module, for example (see e.g. Fig. 2). The vehicle control module 122 may control the movement of the vehicle 12 and may control the direction of travel of the vehicle 12. The vehicle 12 may, therefore, be an autonomous or semi-autonomous vehicle 12 (e.g. a self-driving car).
In some versions the control system 1 may include a remote device 20. The remote device 20 may include any kind of computing device, including for example a desktop or laptop computer, a server, a mobile computing device, a tablet, a cloud computing device, etc. The remote device 20 may include a non-transitory computer-readable storage medium 127. The remote device 20 may be communicatively coupled to the on-board computer system 121 by a wired or wireless communications link. The remote device 20 may be communicatively coupled to the on-board computer system 121 directly and/or via a network 21, such as a cellular network for example (e.g. 3G, 4G, 5G, 6G, LTE etc.).
In some versions the remote device 20 may include the vehicle control module 122 (see e.g. Fig. 3). The vehicle control module 122 may therefore be located remotely from the vehicle 12 but may nevertheless control the movement of the vehicle 12. The vehicle control module 122 may, for example, be a cloud-based vehicle control module 122.
The vehicle 12 may include a steering arrangement 124 that may be configured to control the direction of travel of the vehicle 12. The steering arrangement 124 may include one or more steering members 125. The or each steering member 125 may be configured to engage a travel medium (e.g. land, water, or air) to cause the vehicle 12 to travel in a direction corresponding to the position of the or each steering member 125.
The steering members 125 may include one or more wheels which may be configured to engage a ground surface. The vehicle 12 may therefore be a wheeled vehicle 12. In some versions the steering members 125 may alternatively or additionally include other ground-engaging members such as one or more tracks. In other versions the steering members 125 may include one or more propellers (e.g. to control a direction of movement of a water-based vehicle such as a boat) or one or more wing-based steering members 125, such as one or more ailerons, elevators, rudders, spoilers, flaps, slats, and/or air brakes (e.g. to control a direction of movement of an air-based vehicle 12 such as an aeroplane).
The steering arrangement 124 may include a steering actuator 126 which may be configured to enable a user to control the or each steering member 125 (e.g. to control the position of the or each steering member 125). The user may therefore control the direction of travel of the vehicle 12 using the steering actuator 126. The steering actuator 126 may include for example a steering wheel 126 (e.g. in a car or other land vehicle 12), helm, boat wheel, or ship wheel (e.g. in a water-based vehicle 12), or yoke, tiller or control stick (e.g. for an air-based vehicle 12). Fig. 1 schematically illustrates a land vehicle 12 including a steering wheel 126 and ground-engaging wheels 125 (in this case four such wheels).
The steering actuator 126 may therefore be operably coupled to the or each steering member 125 to control the or each steering member 125. Likewise, the steering actuator 126 may be operably coupled to the or each steering member 125 to control the direction of travel of the vehicle 12.
In some versions the steering actuator 126 may not be included. For example, the vehicle 12 may be an autonomous vehicle 12 (e.g. self-driving car) and therefore there may be no need for a user to control the vehicle 12.
The steering arrangement 124 may be operably coupled to the on-board computer system 121 and may be operably coupled to the vehicle control module 122 (which may be part of the on-board computer system 121 or may be remotely located, e.g. in the remote device 20). The vehicle control module 122 may therefore control the or each steering member 125 (e.g. in order to control the movement of the vehicle 12 and/or to control the direction of travel of the vehicle 12). In versions in which there is no steering actuator 126 provided, the vehicle 12 may therefore be controlled by the vehicle control module 122. In some versions the steering actuator 126 and the vehicle control module 122 may both be provided.

The vehicle 12 may include a vision system 10 which may include one or more sensors. The one or more sensors may include sensors configured to sense electromagnetic waves (e.g. radio waves, visible light) and/or sensors configured to sense acoustic waves, for example. The vision system 10 may include a radar system, a lidar system, an ultrasound system, and/or a camera system, for example, and may include a combination of these systems. The vision system 10 may be operably coupled to the on-board computer system 121. The vision system 10 may determine and/or output (e.g. to the on-board computer system 121) vision data representative of the surroundings of the vehicle 12. The vision data may be used by the on-board computer system 121 (e.g. by the vehicle control module 122) to control the movement of the vehicle 12. For example, the on-board computer system 121 (e.g. the vehicle control module 122) may be configured to take the vision data into account when controlling the steering arrangement 124 (e.g. the steering member(s) 125 thereof). In some versions the vision data may be transmitted to the remote device 20 and the remote device 20 may send control instructions to the vehicle 12 (e.g. the vehicle control module 122 may be located in the remote device 20 as described).

The vehicle 12 may include a location system 11. The location system 11 may be configured to determine the location of the vehicle 12. The location system 11 may be operably and/or communicatively coupled to the on-board computer system 121 and/or path controller 123 and/or vehicle control module 122. The location system 11 may be operably and/or communicatively coupled to the remote device 20 (e.g. via a wired or wireless communications link, whether directly or via the network 21).

As described, the vehicle control module 122 may control the movement of the vehicle 12. Some vehicle control systems and methods provide unsatisfactory vehicle control, which may be uncomfortable, unsettling, excessively wearing on a vehicle steering system, or even dangerous to the passengers of the vehicle and/or other road users. For example, some vehicle control systems and methods produce jerky and/or sudden changes in direction, especially at low speeds,.

The present technology provides an improved vehicle control system 1 and method.

The control system 1 may include a path controller 123. In some versions the on-board computer system 121 may include the path controller 123. In some versions the remote device 20 may include the path controller 123. In some versions the path controller 123 may be split across a plurality of locations. A part of the path controller 123 may therefore be located remotely from the vehicle 12 (e.g. in the remote device 20) and a part of the path controller 123 may be located locally with respect to the vehicle 12 (e.g. in the on-board computer system 121). The path controller 123 may be located locally or remotely with respect to the vehicle 12. In some versions the path controller 123 may be a cloud-based path controller 123. The path controller 123 may be operably coupled to the on-board computer system 121 and may be operably coupled to the vehicle control module 122. In some versions the vehicle control module 122 may be part of the path controller 123. In other words, the path controller 123 may include the vehicle control module 122. The path controller 123 may therefore perform the functions of the vehicle control module 122.

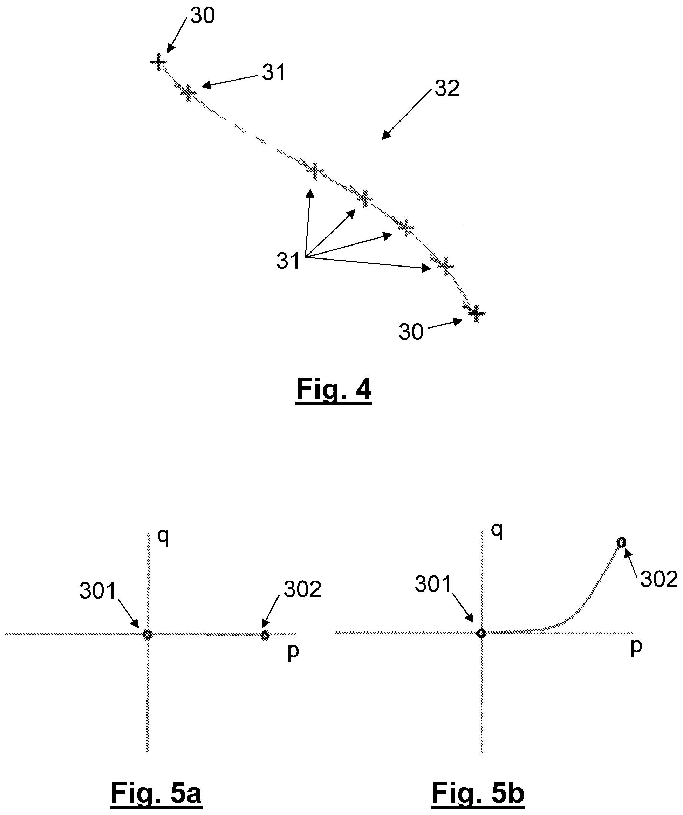

The path controller 123 may be configured to define a target path 32 for the vehicle 12 to follow (see e.g. Fig. 4). The vehicle control module 122 and/or path controller 123 may, therefore, control the movement of the vehicle 12 such that the vehicle 12 follows the target path 32. As will be appreciated, the vehicle 12 may not traverse the target path 32 exactly - for example the path driven or traced by the vehicle 12 may be slightly offset from the target path 32. However, the vehicle 12 may still be considered to be following the target path 32 in such circumstances.

The path controller 123 may obtain waypoint data for a series of waypoints 30. The waypoints 30 may represent target locations for the vehicle 12 to pass through and may define a vehicle route. The vehicle route may represent a real-world route to be traversed by the vehicle 12. The waypoints 30 may be obtained from a map. The map may be a digital and/or virtual map, for example. The waypoint data may be stored in and/or with the map. The map may be a road map, for example. In some versions the map may be provided as a software application and the path controller 123 may interface with the map through an application programming interface (API), for example. The map may use a Cartesian coordinate system.

In some versions the waypoint data may be stored separately from the map. The waypoint data may be stored on a non-transitory computer-readable storage medium. The waypoint data may be stored remotely from the path controller 123. The waypoint data may be stored at the remote device 20 (e.g. on the non-transitory computer-readable storage medium 127 thereof). The waypoint data may be stored in the cloud (e.g. on a cloud server). The waypoint data may be transmitted to the path controller 123 (e.g. from the cloud and/or from the remote device 20). The waypoint data may be stored on a non-transitory computer-readable storage medium operably coupled to the path controller 123.

The waypoint data may include position data. The position data may include a geographical position for each waypoint. The position data may include geographical coordinates, for example. The position data may include coordinates defined with respect to the map (i.e. map coordinates). The position data may include Cartesian coordinates corresponding to the map. The position data may therefore include x and y coordinates, which may correspond to the map. The position for each waypoint may correspond to a real-world location for each waypoint. The position of the or each waypoint may correspond to a point on a road in the real world, for example.

The waypoint data may include heading data. The heading data may include a navigational heading associated with each waypoint. The heading may represent a target direction of travel of the vehicle 12 at each waypoint. The heading may be determined based on the map, for example. The heading may be determined relative to a coordinate axis of the map. The heading may correspond to a heading of a road at a position defined by the position data, for example. In some versions, the heading may be determined by passing a series of waypoints having associated position data through software digital filters. The heading may be defined as an angle. The heading may be defined in radians or degrees. For example, the heading may be defined as an angle relative to an x axis or to a y axis of the map.

The waypoint data may include curvature data. The curvature data may represent heading data differentiated with respect to distance travelled (e.g. distance travelled along a road, which may be a road located at a position defined by the position data). The curvature data may therefore represent a rate of change of the heading with distance travelled. The curvature data may include a curvature associated with each waypoint. In other words, the curvature data may represent the tightness of a curve running through each waypoint, which may vary from no curve (e.g. driving in a straight line) to a tight curve (e.g. turning a sharp corner), for example. The curvature may be defined in terms of angle per distance. The curvature may be defined in radians per metre or degrees per metre, for example. The curvature may, therefore, correspond to a curvature of a road at a position defined by the position data.

The waypoint data may include inflection data. The inflection data may represent curvature data differentiated with respect to distance travelled (e.g. distance travelled along a road, which may be a road located at a position defined by the position data). The inflection data may therefore represent a rate of change of the curvature with distance travelled. The inflection data may include an inflection associated with each waypoint. In other words, the inflection data may represent how much the curvature changes with distance travelled, which may vary from no change (e.g. driving in a straight line or turning at a constant rate, such as when driving around a roundabout or a constant bend) to a rapid change (e.g. when making a sudden steering adjustment). The inflection may be defined in terms of angle per distance squared. The inflection may be defined in radians per metre squared, or degrees per metre squared, for example. The inflection may, therefore, correspond to an inflection of a road at a position defined by the position data.

The waypoint data may include speed limit data. The speed limit data may include a speed limit associated with each waypoint. The speed limit may correspond to a speed limit of a road at a position defined by the position data. The speed limit for a particular waypoint may therefore correspond to the speed limit of a road at the position of the waypoint.

For off-road implementations references to a "road" may be understood as referring to a corresponding characteristic, e.g. for nautical implementations the "road" may be a shipping lane, for aeronautical implementations the "road" may be a flight path, etc. For off-road ground vehicle implementations the "road" may be a track or similar, for example.

The path controller 123 may be configured to interpolate between the waypoints 30 to define the target path 32. The path controller 123 may be configured to determine interpolation point data for a series of interpolation points 31 defining the target path 32. The path controller 123 may be configured to determine interpolation point data for the series of interpolation points 31 defining the target path 32 for the vehicle 12 by interpolating between the waypoints 30. The number of interpolation points 31 in the series of interpolation points 31 between adjacent waypoints 30 may be in the range of about 2-10,000, 100-5,000, 500-3,000, 500-2,000, 500-1,500, 600-1400, 700-1300, 800-1200, 900-1100, or 950-1050. The number of interpolation points 31 in the series of interpolation points 31 between adjacent waypoints 30 may be about 1,000. The number of interpolation points 31 in the target path 32 corresponding to the entire route to be driven by the vehicle 12 may therefore be proportional to the number of waypoints 30 in the route.

The path controller 123 may be configured to determine interpolation point data for the series of interpolation points 31. The interpolation points 31 may represent target locations for the vehicle 12 to pass through and may define the target path 32. The target path 32 may represent a real-world route to be traversed by the vehicle 12.

As described herein, the path controller 123 may be located wholly or partly remotely from the vehicle 12 (e.g. may be at least partially cloud-based and/or at least partially located in the remote device 20). The determination of the interpolation point data may therefore be performed remotely from the vehicle 12 and the interpolation point data may be transmitted to the vehicle 12 (e.g. to the on-board computer system 121 and/or to the vehicle control module 122).

The interpolation point data may include interpolation position data. The interpolation position data may include a geographical position for each interpolation point. The interpolation position data may include geographical coordinates, for example. The interpolation position data may include coordinates defined with respect to the map. The position data may include Cartesian coordinates corresponding to the map. The position data may therefore include x and y coordinates, which may correspond to the map. The position data may correspond to a real-world location.

The interpolation point data may include interpolation heading data. The interpolation heading data may include a navigational heading associated with each interpolation point. The heading may represent a target direction of travel of the vehicle 12 at each interpolation point. The heading may be determined based on the map, for example. The heading may be determined relative to a coordinate axis of the map. The heading may correspond to a heading of a road at a position defined by the interpolation position data, for example. The heading may be defined as an angle. The heading may be defined in radians or degrees. For example, the heading may be defined as an angle relative to an x axis or to a y axis of the map.

The interpolation point data may include interpolation curvature data. The interpolation curvature data may represent interpolation heading data differentiated with respect to distance travelled (e.g. distance travelled along the target path 32). The interpolation curvature data may therefore represent a rate of change of the heading with distance travelled. The interpolation curvature data may include a curvature associated with each interpolation point. In other words, the interpolation curvature data may represent the tightness of a curve running through each interpolation point, which may vary from no curve (e.g. driving in a straight line) to a tight curve (e.g. turning a sharp corner), for example. The curvature may be defined in terms of angle per distance. The curvature may be defined in radians per metre or degrees per metre, for example.

The interpolation point data may include interpolation inflection data. The interpolation inflection data may represent interpolation curvature data differentiated with respect to distance travelled (e.g. distance travelled along the target path 32). The interpolation inflection data may therefore represent a rate of change of the curvature with distance travelled. The interpolation inflection data may include an inflection associated with each interpolation point. In other words, the interpolation inflection data may represent how much the curvature changes with distance travelled, which may vary from no change (e.g. driving in a straight line or turning at a constant rate, such as when driving around a roundabout or a constant bend) to a rapid change (e.g. when making a sudden steering adjustment). The inflection may be defined in terms of angle per distance squared. The inflection may be defined in radians per metre squared, or degrees per metre squared, for example.

Fig. 4 shows a schematic illustration of a target path 32 defined between two waypoints 30. The waypoints 30 are connected by interpolation points 31 as described herein. As described, each waypoint 30 and each interpolation point 31 has an associated heading, curvature, and inflection.

The path controller 123 may be configured to interpolate between the waypoints 30 using an integration technique. The path controller 123 may be configured to determine the interpolation point data using an integration technique. The path controller 123 may, therefore, be configured to interpolate between a first waypoint $w$ and a second waypoint $w + 1$ (which may be consecutive waypoints 30 in the series of waypoints 30). The path controller 123 may be configured to integrate between a first waypoint $w$ and a second waypoint $w + 1$ (which may be consecutive waypoints 30 in the series of waypoints 30). The path controller 123 may be configured to interpolate and/or integrate between successive pairs of waypoints $w$ and $w + 1$ in the series of waypoints 30 from the first waypoint 30 to the final waypoint 30 in the series of waypoints 30. The path controller 123 may therefore be configured to interpolate and/or integrate between all of the waypoints 30 in the series of waypoints 30 to define the target path 32. The path controller 123 may be configured to determine the closest two waypoints 30 to the vehicle 12 and to interpolate and/or integrate between these closest waypoints 30 to define the target path 32. The path controller 123 may therefore use the vehicle 12 location determined by the location system 11 to determine the closest waypoints 30 to the vehicle 12.

The path controller 123 may interpolate between the waypoints 30 and/or determine the interpolation point data using an equation of the form:

$$(i) \qquad r\big(n_{par}\big) = r_{waypoint\ w} + r_{norm} \int_{waypoint\ w}^{waypoint\ w+1} integrand\ dn_{par}$$

where $r$ represents the position of the interpolation point as a complex number, $n_{par}$ represents a parametric variable proportional to the distance travelled from the waypoint $w$ towards the waypoint $w + 1$, $r_{waypoint\ w}$ represents the position of the waypoint $w$ as a complex number, $r_{norm}$ represents a complex constant, *waypoint w* and *waypoint w* + 1 represent the waypoints being interpolated between, and *integrand* represents the integrand.

The position of the interpolation point 31 may be expressed in the form $(r_x, r_y)$ and may be represented by $r$ as a complex number of the form $r_x + ir_y$.

The parametric variable $n_{par}$ may represent a number proportional to the distance travelled from the waypoint $w$ towards the waypoint $w + 1$. For all pairs of waypoints $w$ and $w + 1$ the value of $n_{par}$ may always be a first predetermined value at waypoint $w$ and a second predetermined value at waypoint $w + 1$. These predetermined values may be the same for every pair of waypoints 30.

The position $r_{waypoint\ w}$ of the waypoint $w$ as a complex number may be expressed in the form $r_x + ir_y$.

More specifically, the path controller 123 may interpolate between the waypoints 30 and/or determine the interpolation point data using an equation of the form:

(ii)
$$r(n_{par}) = r_{waypoint\ w} + r_{norm} \int_{waypoint\ w}^{waypoint\ w+1} e^{i(polynomial)}\, dn_{par}$$

where *polynomial* represents a polynomial of the form:

$$n_{coeff,p} n_{par}{}^{p} + n_{coeff,p-1} n_{par}{}^{p-1} + \cdots + n_{coeff,1} n_{par}$$

where $n_{coeff,p} \dots n_{coeff,1}$ represent real constants and $p$ represents the degree (i.e. order) of the polynomial. The quantities $e$ and $i$ have their normal mathematical meaning (i.e. $e$ is Euler's number and $i$ is the imaginary unit, $\sqrt{-1}$ ). In some versions *polynomial* may further include a constant term, although this may be redundant in some implementations as the role of the constant term may be fulfilled by $r_{norm}$ (and therefore the constant term may be zero, for example). In versions in which *polynomial* includes a constant term, $r_{norm}$ may represent a constant that is not complex.

The degree (i.e. order) of the polynomial may be at least 4, at least 5, at least 6, at least 7, at least 8, at least 9, or at least 10. The degree (i.e. order) of the polynomial may be in the range 4-10, 4-9, 4-8, 4-7, 5-8, or 5-7. The degree (i.e. order) of the polynomial may be a non-integer value (e.g. 6.06, 5.05, 4.04, etc). The degree (i.e. order) of the polynomial may be an even number such as an even number of at least 4 or at least 6 or a number such as 4, 6, 8, or 10.

The degree (i.e. order) of the polynomial may be 6. The path controller 123 may therefore interpolate between the waypoints 30 and/or determine the interpolation point data using an equation of the form:

(iii)
$$r(n_{par}) = r_{waypoint\ w} + r_{norm} \int_{waypoint\ w}^{waypoint\ w+1} e^{i(n_{coeff,6} n_{par}{}^{6} + n_{coeff,5} n_{par}{}^{5} + \cdots + n_{coeff,1} n_{par})}\, dn_{par}$$

where the terms are defined as described herein.

In such versions the polynomial in the exponent may define the heading of the interpolation point 31 offset by the angle of $r_{norm}$. The exponent may present this as a complex number of unit magnitude, which may be used to determine the position (e.g. Cartesian position) of the interpolation point 31 (e.g. when integrated and multiplied by the complex constant $r_{norm}$).

An example of a suitable computational method for implementing the numerical integration is the forward-Euler method.

Versions of the technology for use with air-based vehicles may include multiple polynomials, e.g. one for each of yaw, pitch, and roll.

The interpolation techniques described herein may be used to determine the series of interpolation points 31 and the interpolation point data, including the heading, curvature, and inflection of each interpolation point 31. The determination of the inflection of each interpolation point 31 may enable the path controller 123 to define a target path that complies with safety, comfort and/or wear and tear limits. These limits may be set such that sudden or jerky changes in vehicle 12 direction are minimised or eliminated. The use of a sixth degree (i.e. order) polynomial (i.e. a sextic or hexic polynomial) as described herein may be particularly effective in this regard.

The described control system 1 and method also provides a particularly efficient technique for performing interpolation calculations - such as those used to determine the interpolation point data.

The path controller 123 may be configured to interpolate between the waypoints 30 and/or to determine the interpolation point data using a matrix inversion technique.

The path controller 123 may be configured to interpolate between the waypoints 30 and/or to determine the interpolation point data using matrices of the general form:

(iv)
$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

where each of the terms $a_1 \dots a_x$ include $r_{norm}$, and where $A$ represents a matrix that is a function of the limits of $n_{par}$. The path controller 123 may be further configured to calculate the inverse matrix $A^{-1}$, and this calculation may be performed when the limits of $n_{par}$ are set. The matrix $A^{-1}$ may be used in subsequent calculation steps as described herein. In some versions, the limits of $n_{par}$ may be in the range of about -0.5 to -1.5, about -0.6 to -1.4, about -0.7 to -1.3, about -0.8 to -1.2, about -0.9 to -1.1, or about -1 at waypoint w and may be in the range of about 0.5 to 1.5, about 0.6 to 1.4, about 0.7 to 1.3, about 0.8 to 1.2, about 0.9 to 1.1, or about 1 at waypoint $w + 1$. For example, the limits of $n_{par}$ may be about -1 at waypoint w and about 1 at waypoint $w + 1$. In some versions the limits of $n_{par}$ may be about -0.9 at waypoint w and about 0.9 at waypoint $w + 1$.

The path controller 123 may be configured to interpolate between the waypoints 30 and/or to determine the interpolation point data using matrices of the general form:

$$(v) \quad \begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w+1) - (angle\ of\ r_{norm}) \\ (curvature\ at\ w+1) \times (modulus\ of\ r_{norm}) \\ (inflection\ at\ w+1) \times (modulus\ of\ r_{norm})^2 \end{bmatrix} = A \begin{bmatrix} n_{coeff,1} \\ n_{coeff,2} \\ n_{coeff,3} \\ n_{coeff,4} \\ n_{coeff,5} \\ n_{coeff,6} \end{bmatrix}$$

The matrices shown in (v) may in particular be used with equation (iii).

The matrices shown in (v) are particularly suitable for use with the limits of $n_{par}$ set to -1 at waypoint $w$ and 1 at waypoint $w + 1$. The matrices shown in (v) are also compatible with the limits of $n_{par}$ set to -0.9 at waypoint $w$ and 0.9 at waypoint $w + 1$, for example. Other choices of limits for $n_{par}$ are possible with corresponding adjustments to the matrices shown.

The matrix $A$ may have the general form:

$$A = \begin{bmatrix} n_{par,w} & n_{par,w}^2 & n_{par,w}^3 & n_{par,w}^4 & n_{par,w}^5 & n_{par,w}^6 \\ 1 & 2n_{par,w} & 3n_{par,w}^2 & 4n_{par,w}^3 & 5n_{par,w}^4 & 6n_{par,w}^5 \\ 0 & 2 & 6n_{par,w} & 12n_{par,w}^2 & 20n_{par,w}^3 & 30n_{par,w}^4 \\ n_{par,w+1} & n_{par,w+1}^2 & n_{par,w+1}^3 & n_{par,w+1}^4 & n_{par,w+1}^5 & n_{par,w+1}^6 \\ 1 & 2n_{par,w+1} & 3n_{par,w+1}^2 & 4n_{par,w+1}^3 & 5n_{par,w+1}^4 & 6n_{par,w+1}^5 \\ 0 & 2 & 6n_{par,w+1} & 12n_{par,w+1}^2 & 20n_{par,w+1}^3 & 30n_{par,w+1}^4 \end{bmatrix}$$

The term $n_{par,w}$ may represent the limit of $n_{par}$ at waypoint $w$ and the term $n_{par,w+1}$ may represent the limit of $n_{par}$ at waypoint $w + 1$. The inverse matrix $A^{-1}$ may be determined from the matrix $A$ by known methods. The matrix $A$ is, therefore, a function of the limits of $n_{par}$. Where the limits of $n_{par}$ are constant, the matrix $A$ is therefore a constant. Accordingly, the value of $A$ may be predetermined and may be provided to the path controller 123. The value of $A$ may be stored with the waypoint data and may be a part of the waypoint data, for example. Likewise, the value of $A^{-1}$ may also be a constant which may be predetermined and may be provided to the path controller 123 and may be stored with the waypoint data, optionally as part of the waypoint data. In some versions the path controller 123 may determine the value of $A$ and $A^{-1}$ using the limits of $n_{par}$.

The path controller 123 may be configured to interpolate between the waypoints 30 and/or to determine the interpolation point data by assigning a value to $r_{norm}$ (in an equation of the form shown in equations (i)-(iii) herein). The value assigned to $r_{norm}$ may be the value that would join the two waypoints $w$ and $w + 1$ if the integral shown in equations (i)-(iii) returned a value of 1. The value assigned to $r_{norm}$ may be random, or may be a predetermined value. In some versions the same initial value of $r_{norm}$ may be used for each pair of waypoints $w$ and $w + 1$.

The path controller 123 may be further configured to determine the coefficients $n_{coeff,1} \ldots n_{coeff,p}$ shown in equations (ii) and (iii) ($x$ being 6 in equation (iii)) for the assigned value of $r_{norm}$. The coefficients may be determined using the inverse matrix $A^{-1}$. The coefficients may be determined using matrices of the general form:

$$(v) \quad \begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

The coefficients may be determined using matrices of the general form:

$$(vi) \quad \begin{bmatrix} n_{coeff,1} \\ n_{coeff,2} \\ n_{coeff,3} \\ n_{coeff,4} \\ n_{coeff,5} \\ n_{coeff,6} \end{bmatrix} = A^{-1} \begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w+1) - (angle\ of\ r_{norm}) \\ (curvature\ at\ w+1) \times (modulus\ of\ r_{norm}) \\ (inflection\ at\ w+1) \times (modulus\ of\ r_{norm})^2 \end{bmatrix}$$

The path controller 123 may be configured to determine the heading, curvature, and inflection of each interpolation point 31 using the determined coefficients. The path controller 123 may be configured to determine the position of each interpolation point 31 using an equation of the form shown in equation (ii) or (iii) by substituting the determined coefficient values into the equation. The path controller 123 may be configured to use numerical integration to solve equations of the form shown in equations (i)-(iii).

The position of the final interpolation point 31 in the series of interpolation points 31 should optimally coincide with the position of the waypoint $w + 1$; however, it is likely that there will be a position error between the two. Therefore, the path controller 123 may be further configured to determine the complex error in position between the final interpolation point 31 and the waypoint $w + 1$. The path controller 123 may be configured to assign a new value to $r_{norm}$ to reduce the position error. The path controller 123 may be configured to reduce the position error by subtracting a proportion of the error from $r_{norm}$.

The path controller 123 may be configured to repeat the process with the new value of $r_{norm}$. As the process repeats, the error will be reduced. The path controller 123 may be configured to continue the repetition until at least one termination criterion is met.

The termination criterion may include a predetermined number of repetitions. The predetermined number of repetitions may be in the range of about 2-100, 3-50, 5-30, 10-25, 10-20, 11-19, 12-18, 13-17, or 14-16. The predetermined number of repetitions may be about 15. The termination criterion may include a predetermined threshold position error, wherein the process may be terminated if the position error is below and/or within the threshold. The termination criterion may include a predetermined length of time for which the process has been running.

The path controller 123 may be configured to translate and/or rotate each pair of waypoints $w$ and $w + 1$ on to a reference plane (e.g. defined as a plane $p$-$q$). In such versions, waypoint $w$ may be located at the origin of the reference plane. The heading of waypoint $w$ may be represented as zero in the reference plane, e.g. such that the heading is aligned with the $p$ axis of the $p$-$q$ plane (which may be analogous to the x axis in an $x$-$y$ frame of reference, for example). Fig. 5a illustrates an example of a waypoint $w$ 301 and a waypoint $w + 1$ 302 connected by a straight path. In this case, waypoint $w + 1$ 302 is located on the $p$ axis as illustrated. In this case, using the error correction method described above, $r_{norm}$ would be a real number (i.e. without an angle). The location of the final interpolation point would therefore coincide with waypoint $w + 1$ 302 and so the iterative error correction would produce no change.

However, in some instances the path between waypoint $w$ 301 and waypoint $w + 1$ 302 will be curved. An example of such a case is illustrated in Fig. 5b. In such cases, as described, the waypoint $w$ may be located at the origin of the reference plane. The heading of waypoint $w$ may be represented as zero in the reference plane, e.g. such that the heading is aligned with the $p$ axis of the $p$-$q$ plane (which may be analogous to the x axis in an $x$-$y$ frame of reference, for example). However, in such cases, due to the curvature of the path, the location of the waypoint $w + 1$ 302 may not coincide with the $p$ axis.

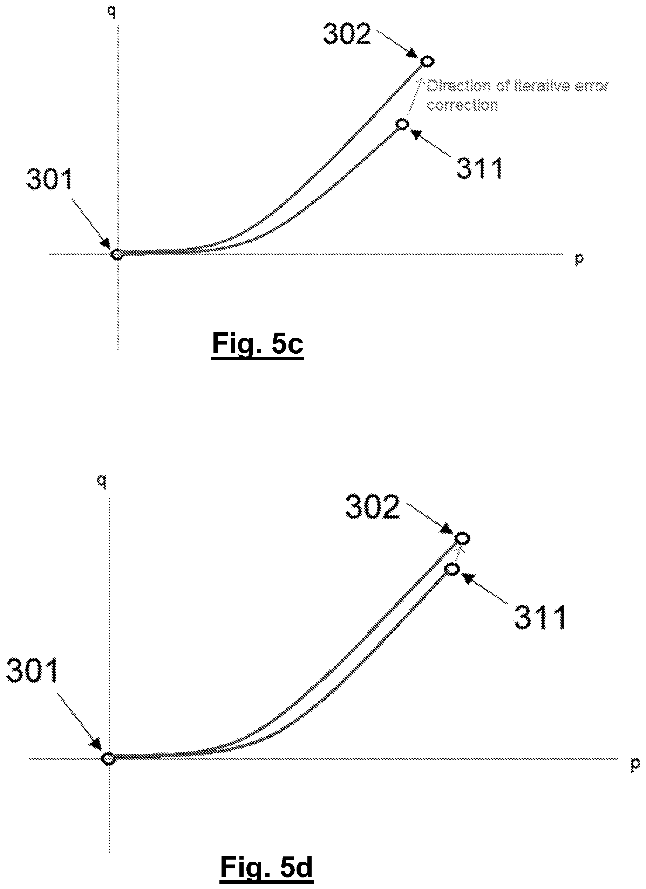

Using the iterative error correction method described above, a value may accordingly be assigned to $r_{norm}$ that would correspond to the position of waypoint $w + 1$ on the $p$-$q$ plane as the equivalent complex number. In other words, the initial value of $r_{norm}$ may be the coordinate $(p_{w+1}, q_{w+1})$ of waypoint $w + 1$ on the $p$-$q$ plane - ie. $p_{w+1} + iq_{w+1}$. As illustrated in Fig. 5c, there may be an error between the location of the final interpolation point 311 and waypoint $w + 1$ 302. As described above, the iterative error correction process may then assign a new value to $r_{norm}$ to reduce this error, and may recalculate the position of the final interpolation point (e.g. using the described inverse matrix method). Over the course of the iterations, the error will reduce, as illustrated in Fig. 5d.

The path controller 123 may be configured to perform the interpolation calculation on the plane (e.g. $p$-$q$ plane) to determine the interpolation points 31 and/or interpolation point data. The path controller 123 may be further configured to perform an inverse translation and/or rotation on the determined interpolation points 31 and/or interpolation point data to convert these back to the original frame of reference, which may be the frame of reference of the map (e.g. $x$-$y$ and/or Cartesian frame of reference). The path controller 123 may be configured to perform an inverse translation and/or rotation on the curve position formula (e.g. equation (i), (ii) or (iii)). This may prevent or inhibit angular wraparound.

The path controller 123 may therefore define the target path 32 for the vehicle 12 using the determined interpolation points 31 and/or interpolation point data.

In some versions the vehicle control module 122 may be part of the path controller 123 and therefore the path controller 123 may be configured to control the movement of the vehicle 12. The path controller 123 may therefore be configured to control the vehicle 12 such that the vehicle 12 follows the target path. Similarly, in some versions, the path controller 123 may be part of the vehicle control module 122.

The path controller 123 may be configured to determine the closest point on the target path 32 to the vehicle 12. The closest point may be an interpolation point 31 or a waypoint 30. In some versions the path controller 123 may be configured to determine the closest interpolation point 31 to the vehicle 12. The error between the vehicle 12 position and the position of the closest point (e.g. closest interpolation point 31) may be determined by the path controller 123. This error may be a lateral position error. The path controller 123 may use the vehicle 12 location provided by the location system 11 to determine the closest point on the target path 32.

The path controller 123 may treat the target path 32 and the lateral error using a feed-forward (e.g. derivative feed-forward) and/or closed-loop controller such as a proportional closed-loop controller. The feed-forward term may replicate the heading of the closest point (e.g. closest interpolation point 31) on the target path 32 and may also determine its curvature and inflection with respect to vehicle 12 distance travelled.

The closed-loop calculation may close the lateral error between the vehicle 12 and the target path 32 using a pure pursuit technique. A pure pursuit target may therefore be provided and the path controller 123 and/or vehicle control module 122 may control the vehicle 12 such that the vehicle 12 moves towards the pure pursuit target. The position of the pure pursuit target may correspond to the position of the closest point on the target path 32 (e.g. closest interpolation point 31) plus a predetermined or variable pure pursuit look-ahead distance taken in the direction of the heading of the closest point. The path controller 123 and/or vehicle control module 122 may therefore control the vehicle 12 to travel on a heading in the direction of the pure pursuit target. The heading of the pure pursuit target with respect to the vehicle 12 may be referred to as the desired heading. The pure pursuit look-ahead distance may vary (e.g. proportionally) with vehicle 12 speed and/or velocity.

The path controller 123 may determine a desired curvature to move the vehicle 12 onto the desired heading. The path controller 123 may determine a required inflection to move the vehicle 12 onto the desired curvature.

The path controller 123 may integrate the required inflection to determine a required curvature for the steering arrangement 124. The path controller 123 and/or vehicle control module 122 may control the steering arrangement 124 such that the steering arrangement 124 moves to the required curvature, and may do so at a rate corresponding to the required inflection.

The path controller 123 may be configured to minimise the required inflection. The path controller 123 may be configured not to exceed a threshold maximum required inflection. The path controller 123 may, therefore, be configured to drive the vehicle 12 smoothly and safely.

The disclosed technology provides many benefits over prior art control systems and methods. For example, the control system 1 and method described herein can be used to drive a vehicle smoothly and safely, while minimising wear on the vehicle. The use of waypoint data including position, curvature and/or inflection data facilitates the construction of a smoother target path for a vehicle. Furthermore, the determination of interpolation point data including position, curvature and/or inflection data also facilitates the construction of a smoother target path for the vehicle. The use of the equations shown herein also facilitates smooth driving of the vehicle. The use of a sextic polynomial is particularly effective. Furthermore, the described iterative calculation involving the matrix inverse method runs quickly and efficiently, facilitating safe real-time vehicle control using the described system and method.

The control system 1 and method described herein allows the storage and/or generation of a smooth vehicle path with waypoints spaced much further apart, in some cases, than would be possible with a solely position-based (e.g. x,y) set of waypoints. Accordingly, the waypoint data required to construct the vehicle path can effectively be compressed using the technology disclosed herein. For example, a series of position-based waypoints spaced 1 metre apart could be compressed using the technology disclosed herein to a set of waypoints spaced as far as 50 metres apart, giving a compression rate of e.g. 20:1.

The technology described herein can also be used in mapping tools, such as for drawing out and editing maps that use the type of path definition described herein, for example. Accordingly, the disclosed technology may include a method of generating a map, the method comprising: generating, using a processor, waypoint data for a series of waypoints; determining, using a processor, interpolation point data for a series of interpolation points defining a target path by interpolating between the waypoints; and storing the target path in a computer-readable non-transitory storage medium, wherein the waypoint data includes position data and at least one of heading data, curvature data, and/or inflection data, wherein curvature data represents heading data differentiated with respect to distance travelled and inflection data represents curvature data differentiated with respect to distance travelled. The map may be a map for an autonomous vehicle and the target path may be a target path for the vehicle. The method may use the techniques described herein to determine the interpolation point data, such as by using any of the equations (i)-(vi) described herein or more generally by using the interpolation and matrix inversion techniques described herein. The technology may, therefore, be used to create a new map or to edit an existing map, for example. The processor or processors used to generate the map may be a processor or processors of the path controller 123, for example.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

**Claims**

1.  A method of controlling a vehicle (12), the method including:

    providing waypoint data for a series of waypoints (30) to a path controller (123);
    using the path controller to determine interpolation point data for a series of interpolation points (31) defining a target path (32) for the vehicle by interpolating between the waypoints; and
    controlling the vehicle such that the vehicle follows the target path,
    wherein the waypoint data includes position data and heading data, curvature data, and inflection data, or wherein the waypoint data includes position data and the method includes using the path controller to determine heading data, curvature data, and inflection data using the waypoint data,
    wherein curvature data represents heading data differentiated with respect to distance travelled and inflection data represents curvature data differentiated with respect to distance travelled,
    wherein the path controller determines the interpolation point data using an equation of the form:

    $$r(n_{par}) = r_{waypoint\ w} + r_{norm} \int_{waypoint\ w}^{waypoint\ w+1} e^{i(polynomial)}\, dn_{par}$$

    where $r$ represents the position of the interpolation point,
    $n_{par}$ represents a parametric variable proportional to the distance travelled from the waypoint $w$ towards the waypoint $w + 1$,
    $r_{waypoint\ w}$ represents the position of the waypoint $w$,
    $r_{norm}$ represents a constant,
    *waypoint w* and *waypoint w* + 1 represent the waypoints being interpolated between; and
    where *polynomial* represents a polynomial of the form:

    $$n_{coeff,p} n_{par}{}^{p} + n_{coeff,p-1} n_{par}{}^{p-1} + \cdots + n_{coeff,1} n_{par}$$

    where $n_{coeff,p} \ldots n_{coeff,1}$ represent constants and $p$ represents the degree of the polynomial,
    **characterized in that**
    the path controller determines the interpolation point data using a matrix inversion technique,

    wherein the path controller determines the interpolation point data using matrices of the general form:

    $$\begin{bmatrix} a_1 \\ \vdots \\ a_x \end{bmatrix} = A \begin{bmatrix} n_{coeff,1} \\ \vdots \\ n_{coeff,p} \end{bmatrix}$$

    where each of the terms $a_1 \ldots a_x$ include $r_{norm}$, and
    where $A$ represents a matrix that is a function of the limits of $n_{par}$, wherein the path controller determines the interpolation point data by:

    assigning a value to $r_{norm}$;
    determining the coefficients $n_{coeff,1} \ldots n_{coeff,p}$ using the inverse matrix $A^{-1}$ using matrices of the general form:

    $$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

    determining the heading, curvature, and inflection of each interpolation point using the determined coefficients;
    determining the position of each interpolation point by substituting the determined coefficients into the *polynomial;*
    determining the error in position between the final interpolation point and *waypoint w* + 1; and

assigning a new value to $r_{norm}$ to reduce the error and repeating the process until at least one termination criterion is met.

2. A method according to claim 1, wherein the waypoint data includes position data, heading data, curvature data, and inflection data.

3. A method according to any preceding claim, wherein the interpolation point data includes interpolation position data and at least one of interpolation heading data, interpolation curvature data, and/or interpolation inflection data.

4. A method according to claim 3, wherein the interpolation point data includes interpolation position data, interpolation heading data, interpolation curvature data, and interpolation inflection data.

5. A method according to any preceding claim, wherein the degree of the polynomial is 6.

6. A method according to any preceding claim, wherein the path controller determines the interpolation point data using matrices of the general form:

$$\begin{bmatrix}(heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w+1) - (angle\ of\ r_{norm}) \\ (curvature\ at\ w+1) \times (modulus\ of\ r_{norm}) \\ (inflection\ at\ w+1) \times (modulus\ of\ r_{norm})^2\end{bmatrix} = A\begin{bmatrix}n_{coeff,1} \\ n_{coeff,2} \\ n_{coeff,3} \\ n_{coeff,4} \\ n_{coeff,5} \\ n_{coeff,6}\end{bmatrix}$$

7. A method according to claim 6, wherein the path controller determines the interpolation point data by:

assigning a value to $r_{norm}$;
determining the coefficients $n_{coeff,1}$ ... $n_{coeff,p}$ using the inverse matrix $A^{-1}$ using matrices of the general form:

$$\begin{bmatrix}n_{coeff,1} \\ n_{coeff,2} \\ n_{coeff,3} \\ n_{coeff,4} \\ n_{coeff,5} \\ n_{coeff,6}\end{bmatrix} = A^{-1}\begin{bmatrix}(heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w+1) - (angle\ of\ r_{norm}) \\ (curvature\ at\ w+1) \times (modulus\ of\ r_{norm}) \\ (inflection\ at\ w+1) \times (modulus\ of\ r_{norm})^2\end{bmatrix}$$

determining the heading, curvature, and inflection of each interpolation point using the determined coefficients;
determining the position of each interpolation point by substituting the determined coefficients into the *polynomial;*
determining the error in position between the final interpolation point and *waypoint w* + 1; and
assigning a new value to $r_{norm}$ to reduce the error and repeating the process until a termination criterion is met.

8. A method according to any preceding claim, wherein the termination criterion includes a predetermined number of repetitions.

9. A system (1) for controlling a vehicle (12), the system including:

a non-transitory computer-readable storage medium (127); and
a path controller (123) operably coupled to the storage medium,

wherein the path controller is configured to obtain waypoint data for a series of waypoints (30) from the storage medium and to determine interpolation point data for a series of interpolation points (31) defining a target path (32) for the vehicle by interpolating between the waypoints,
wherein the path controller is configured to control the vehicle such that the vehicle follows the target path,
wherein the waypoint data includes position data and heading data, curvature data, and inflection data, or
wherein the waypoint data includes position data and the method includes using the path controller to determine heading data, curvature data, and inflection data using the waypoint data,

wherein the curvature data represents heading data differentiated with respect to distance travelled and the inflection data represents curvature data differentiated with respect to distance travelled,

wherein the path controller is configured to determine the interpolation point data using an equation of the form:

$$r\left(n_{par}\right) = r_{waypoint\ w} + r_{norm} \int_{waypoint\ w}^{waypoint\ w+1} e^{i(polynomial)}\, dn_{par}$$

where $r$ represents the position of the interpolation point,
$n_{par}$ represents a parametric variable proportional to the distance travelled from the waypoint $w$ towards the waypoint $w$ + 1,
$r_{waypoint\ w}$ represents the position of the waypoint $w$,
$r_{norm}$ represents a constant,
*waypoint w* and *waypoint w* + 1 represent the waypoints being interpolated between; and
where *polynomial* represents a polynomial of the form:

$$n_{coeff,p}\,n_{par}{}^{p} + n_{coeff,p-1}\,n_{par}{}^{p-1} + \cdots + n_{coeff,1}\,n_{par}$$

where $n_{coeff,p}$ ... $n_{coeff,1}$ represent constants and $p$ represents the degree of the polynomial,
**characterized in that**
the path controller is configured to determine the interpolation point data using a matrix inversion technique,

wherein the path controller is configured to determine the interpolation point data using matrices of the general form:

$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

where each of the terms $a_1$ ... $a_x$ include $r_{norm}$, and
where $A$ represents a matrix that is a function of the limits of $n_{par}$, wherein the path controller is configured to determine the interpolation point data by:

assigning a value to $r_{norm}$;
determining the coefficients $n_{coeff,1}$ ... $n_{coeff,p}$ using the inverse matrix $A^{-1}$ using matrices of the general form:

$$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

determining the heading, curvature, and inflection of each interpolation point using the determined coefficients;
determining the position of each interpolation point by substituting the determined coefficients into the *polynomial;*
determining the error in position between the final interpolation point and *waypoint w* + 1; and

assigning a new value to $r_{norm}$ to reduce the error and repeating the process until at least one termination criterion is met.

10. A computer program product or computer-readable storage medium comprising instructions which, when executed by a computer, cause the computer to carry out the method of any of claims 1-8.

**Patentansprüche**

1.  Verfahren zum Steuern eines Fahrzeugs (12), wobei das Verfahren Folgendes beinhaltet:

Versorgen einer Bahnsteuerung (123) mit Wegpunktdaten für eine Reihe von Wegpunkten (30);
Verwenden der Bahnsteuerung zum Bestimmen von Interpolationspunktdaten für eine Reihe von eine Zielbahn (32) für das Fahrzeug definierenden Interpolationspunkten (31) durch Interpolieren zwischen den Wegpunkten; und
Steuern des Fahrzeugs, so dass das Fahrzeug der Zielbahn folgt,
wobei die Wegpunktdaten Positionsdaten und Fahrtrichtungsdaten, Krümmungsdaten und Abbiegedaten umfassen, oder wobei die Wegpunktdaten Positionsdaten umfassen und das Verfahren die Verwendung der Bahnsteuerung umfasst, um Fahrtrichtungsdaten, Krümmungsdaten und Abbiegedaten anhand der Wegpunktdaten zu bestimmen,
wobei Krümmungsdaten Fahrtrichtungsdaten darstellen, die in Bezug auf die zurückgelegte Entfernung differenziert sind, und Abbiegedaten Krümmungsdaten darstellen, die in Bezug auf die zurückgelegte Entfernung differenziert sind,
wobei die Bahnsteuerung die Interpolationspunktdaten mittels einer Gleichung der folgenden Form bestimmt:

$$r(n_{par}) = r_{waypoint\ w} + r_{norm} \int_{waypoint\ w}^{waypoint\ w+1} e^{i(polynomial)} \, dn_{par}$$

wobei $r$ die Position des Interpolationspunkts darstellt,
$n_{par}$ eine parametrische Variable darstellt, die proportional zur zurückgelegten Entfernung von Wegpunkt $w$ zu Wegpunkt $w + 1$ ist,
$r_{Wegpunkt\ w}$ die Position des Wegpunkts $w$ darstellt,
$r_{norm}$ eine Konstante darstellt,
*Wegpunkt w* und *Wegpunkt w* + 1 die Wegpunkte darstellen, zwischen denen interpoliert wird, und
wobei *polynomial* ein Polynom der folgenden Form darstellt:

$$n_{coeff,p}n_{par}{}^{p} + n_{coeff,p-1}n_{par}{}^{p-1} + \cdots + n_{coeff,1}n_{par}$$

wobei $n_{coeff\ p}$ ... $n_{coeff\ l}$ Konstanten darstellen und $p$ den Grad des Polynoms darstellt,
**dadurch gekennzeichnet, dass**
die Bahnsteuerung die Interpolationspunktdaten mittels einer Matrixinversionstechnik bestimmt,
wobei die Bahnsteuerung die Interpolationspunktdaten mit Hilfe von Matrizen der folgenden allgemeinen Form bestimmt:

$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

wobei jeder der Terme $a_1$... $a_x$ $r_{norm}$ enthält und
wobei *A* eine Matrix darstellt, die eine Funktion der Grenzen von $n_{par}$ ist, wobei die Bahnsteuerung die Interpolationspunktdaten bestimmt durch:

Zuweisen eines Werts zu $r_{norm}$,
Bestimmen der Koeffizienten $n_{coeff\ l}$... $n_{coeff\ p}$ mit Hilfe der inversen Matrix $A^{-1}$ mittels Matrizen der folgenden allgemeinen Form:

$$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

Bestimmen von Fahrtrichtung, Krümmung und Abbiegung jedes Interpolationspunkts anhand der bestimmten Koeffizienten;
Bestimmen der Position jedes Interpolationspunkts durch Substituieren der bestimmten Koeffizienten in das *polynomial;*
Bestimmen des Positionsfehlers zwischen dem letzten Interpolationspunkt und *Wegpunkt w* + 1; und
Zuweisen eines neuen Wertes zu $r_{norm}$, um den Fehler zu reduzieren, und Wiederholen des Prozesses, bis mindestens ein Beendigungskriterium erfüllt ist.

2. Verfahren nach Anspruch 1, wobei die Wegpunktdaten Positionsdaten, Fahrtrichtungsdaten, Krümmungsdaten und Abbiegedaten umfassen.

3. Verfahren nach einem vorherigen Anspruch, wobei die Interpolationspunktdaten Interpolationspositionsdaten und mindestens eines von Interpolationsfahrtrichtungsdaten, Interpolationskrümmungsdaten und/oder Interpolationsabbiegedaten umfassen.

4. Verfahren nach Anspruch 3, wobei die Interpolationspunktdaten Interpolationspositionsdaten, Interpolationsfahrtrichtungsdaten, Interpolationskrümmungsdaten und Interpolationsabbiegedaten umfassen.

5. Verfahren nach einem vorherigen Anspruch, wobei der Grad des Polynoms 6 ist.

6. Verfahren nach einem vorherigen Anspruch, wobei die Bahnsteuerung die Interpolationspunktdaten mittels Matrizen der folgenden allgemeinen Form bestimmt:

$$
\begin{bmatrix}
(heading\ at\ w) - (angle\ of\ r_{norm}) \\
(curvature\ at\ w) \times (modulus\ of\ r_{norm}) \\
(inflection\ at\ w) \times (modulus\ of\ r_{norm})^2 \\
(heading\ at\ w+1) - (angle\ of\ r_{norm}) \\
(curvature\ at\ w+1) \times (modulus\ of\ r_{norm}) \\
(inflection\ at\ w+1) \times (modulus\ of\ r_{norm})^2
\end{bmatrix}
= A
\begin{bmatrix}
n_{coeff,1} \\
n_{coeff,2} \\
n_{coeff,3} \\
n_{coeff,4} \\
n_{coeff,5} \\
n_{coeff,6}
\end{bmatrix}
$$

7. Verfahren nach Anspruch 6, wobei die Bahnsteuerung die Interpolationspunktdaten bestimmt durch:

Zuweisen eines Werts zu $r_{norm}$,
Bestimmen der Koeffizienten $n_{coeff\,I}$... $n_{coeff\,p}$ mittels der inversen Matrix $A^{-1}$ mit Hilfe von Matrizen der folgenden allgemeinen Form:

$$
\begin{bmatrix}
n_{coeff,1} \\
n_{coeff,2} \\
n_{coeff,3} \\
n_{coeff,4} \\
n_{coeff,5} \\
n_{coeff,6}
\end{bmatrix}
= A^{-1}
\begin{bmatrix}
(heading\ at\ w) - (angle\ of\ r_{norm}) \\
(curvature\ at\ w) \times (modulus\ of\ r_{norm}) \\
(inflection\ at\ w) \times (modulus\ of\ r_{norm})^2 \\
(heading\ at\ w+1) - (angle\ of\ r_{norm}) \\
(curvature\ at\ w+1) \times (modulus\ of\ r_{norm}) \\
(inflection\ at\ w+1) \times (modulus\ of\ r_{norm})^2
\end{bmatrix}
$$

Bestimmen von Fahrtrichtung, Krümmung und Abbiegung jedes Interpolationspunkts anhand der bestimmten Koeffizienten;
Bestimmen der Position jedes Interpolationspunkts durch Substituieren der bestimmten Koeffizienten in das *Polynom*;
Bestimmen des Positionsfehlers zwischen dem letzten Interpolationspunkt und dem *Wegpunkt w* + 1; und
Zuweisen eines neuen Werts zu $r_{norm}$, um den Fehler zu reduzieren, und Wiederholen des Vorgangs, bis ein Beendigungskriterium erfüllt ist.

8. Verfahren nach einem vorherigen Anspruch, wobei das Beendigungskriterium eine vorbestimmte Anzahl von Wiederholungen umfasst.

9. System (1) zum Steuern eines Fahrzeugs (12), wobei das System Folgendes umfasst:

ein nichtflüchtiges, computerlesbares Speichermedium (127); und

eine Bahnsteuerung (123), die mit dem Speichermedium wirkgekoppelt ist,

wobei die Bahnsteuerung zum Erhalten von Wegpunktdaten für eine Reihe von Wegpunkten (30) aus dem Speichermedium und zum Bestimmen von Interpolationspunktdaten für eine Reihe von einen Zielpfad (32) für das Fahrzeug definierenden Interpolationspunkten (31) durch Interpolieren zwischen den Wegpunkten konfiguriert ist,
wobei die Wegsteuerung zum Steuern des Fahrzeugs konfiguriert ist, so dass das Fahrzeug der Zielbahn folgt,
wobei die Wegpunktdaten Positionsdaten und Fahrtrichtungsdaten, Krümmungsdaten und Abbiegedaten umfassen, oder wobei die Wegpunktdaten Positionsdaten umfassen und das Verfahren die Verwendung der Bahnsteuerung zum Bestimmen von Fahrtrichtungsdaten, Krümmungsdaten und Abbiegedaten anhand der Wegpunktdaten beinhaltet,
wobei die Krümmungsdaten Fahrtrichtungsdaten darstellen, die in Bezug auf die zurückgelegte Entfernung differenziert sind, und die Abbiegedaten Krümmungsdaten darstellen, die in Bezug auf die zurückgelegte Entfernung differenziert sind,

wobei die Bahnsteuerung konfiguriert ist zum Bestimmen der Interpolationspunktdaten mittels einer Gleichung der folgenden Form:

$$r(n_{par}) = r_{waypoint\ w} + r_{norm} \int_{waypoint\ w}^{waypoint\ w+1} e^{i(polynomial)}\, dn_{par}$$

wobei $r$ die Position des Interpolationspunkts darstellt,
$n_{par}$ eine parametrische Variable darstellt, die proportional zur zurückgelegten Entfernung von Wegpunkt $w$ zu Wegpunkt $w + 1$ ist,
$r_{Wegpunkt\ w}$ die Position des Wegpunkts w darstellt,
$r_{norm}$ eine Konstante darstellt,
*Wegpunkt w* und *Wegpunkt w + 1* die Wegpunkte darstellen, zwischen denen interpoliert wird; und

wobei *polynomial* ein Polynom der folgenden Form darstellt:

$$n_{coeff,p}\,n_{par}^{\ p} + n_{coeff,p-1}\,n_{par}^{\ p-1} + \cdots + n_{coeff,1}\,n_{par}$$

wobei $n_{coeff\ p}$ ... $n_{coeff\ l}$ Konstanten darstellen und $p$ den Grad des Polynoms darstellt,
**dadurch gekennzeichnet, dass**
die Bahnsteuerung zum Bestimmen der Interpolationspunktdaten mittels einer Matrixinversionstechnik konfiguriert ist,
wobei die Bahnsteuerung konfiguriert ist zum Bestimmen der Interpolationspunktdaten mit Hilfe von Matrizen der folgenden allgemeinen Form:

$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

wobei jeder der Terme $a_1$... $a_x$ $r_{norm}$ enthält und
wobei $A$ eine Matrix darstellt, die eine Funktion der Grenzen von $n_{par}$ ist,

wobei die Bahnsteuerung konfiguriert ist zum Bestimmen der Interpolationspunktdaten durch:

Zuweisen eines Werts zu $r_{norm}$,
Bestimmen der Koeffizienten $n_{coeff\ l}$... $n_{coeff\ p}$ mittels der inversen Matrix $A^{-1}$ mittels Matrizen der folgenden allgemeinen Form:

$$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

Bestimmen von Fahrtrichtung, Krümmung und Abbiegung jedes Interpolationspunkts anhand der bestimmten Koeffizienten;

Bestimmen der Position jedes Interpolationspunkts durch Substituieren der bestimmten Koeffizienten in das *Polynom*;

Bestimmen des Positionsfehlers zwischen dem letzten Interpolationspunkt und *Wegpunkt w* + 1; und

Zuweisen eines neuen Wertes zu $r_{norm}$, um den Fehler zu reduzieren, und Wiederholen des Prozesses, bis mindestens ein Beendigungskriterium erfüllt ist.

10. Computerprogrammprodukt oder computerlesbares Speichermedium, das Befehle umfasst, die bei Ausführung durch einen Computer den Computer zum Durchführen des Verfahrens nach einem der Ansprüche 1 bis 8 veranlassen.

**Revendications**

1. L'invention concerne un procédé de contrôle d'un véhicule (12), le procédé consistant à :

fournir des données de points de cheminement pour une série de points de cheminement (30) à un contrôleur de trajectoire (123) ;

utiliser le contrôleur de trajectoire pour déterminer des données de points d'interpolation (31) pour une série de points d'interpolation définissant une trajectoire cible (32) pour le véhicule par interpolation entre les points de cheminement ; et

contrôler le véhicule de sorte que celui-ci suive la trajectoire cible,

dans lequel les données de points de cheminement comprennent des données de position et de cap, de courbure et d'inflexion, ou dans lequel les données de points de cheminement comprennent des données de position et le procédé comprend l'utilisation du contrôleur de trajectoire pour déterminer des données de cap, de courbure et d'inflexion à l'aide des données de points de cheminement,

dans lequel les données de courbure représentent les données de cap différenciées par rapport aux données de distance parcourue et les données d'inflexion représentent les données de courbure différenciées par rapport à la distance parcourue,

dans lequel le contrôleur de trajectoire détermine les données de points d'interpolation en appliquant une équation de la forme :

$$r\left(n_{par}\right) = r_{waypoint\,w} + r_{norm} \int_{waypoint\,w}^{waypoint\,w+1} e^{i(polynomial)} \, dn_{par}$$

où $r$ représente la position du point d'interpolation,

$n_{par}$ représente une variable paramétrique proportionnelle à la distance parcourue entre le point de cheminement $w$ et le point de cheminement $w$ + 1,

$r_{waypoint\,w}$ représente la position du point de cheminement $w$,

$r_{norm}$ représente une constante,

*waypoint w et waypoint w* + 1 représentent les points de cheminement entre lesquels l'interpolation est effectuée ; et

où le *polynôme* représente un *polynôme* de la forme :

$$n_{coeff,p} n_{par}{}^{p} + n_{coeff,p-1} n_{par}{}^{p-1} + \cdots + n_{coeff,1} n_{par}$$

où $n_{coeff,p} \ldots n_{coeff,1}$ représentent des constantes et $p$ représente le degré du polynome,

**caractérisé en ce que** le contrôleur de trajectoire détermine les données de points d'interpolation par une technique d'inversion de matrice dans lequel le contrôleur de trajectoire détermine les données de points d'interpolation à l'aide de matrices de la forme générale :

$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

où chacun des termes *a1... ax* comprend $r_{norm}$, et
où *A* représente une matrice qui est une fonction des limites de $n_{par}$,

dans lequel le contrôleur de trajectoire détermine les données de points d'interpolation en :

attribuant une valeur à $r_{norm}$,
déterminant les coefficients $n_{coeff,1}... n_{coeff,p}$ en utilisant la matrice inverse $A^{-1}$ à l'aide de matrices de la forme générale :

$$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

déterminant le cap, la courbure et l'inflexion de chaque point d'interpolation en utilisant les coefficients déterminés ;
déterminant la position de chaque point d'interpolation en substituant les coefficients déterminés dans le *polynôme* ;
déterminant l'erreur de position entre le point d'interpolation final et *waypoint w* + 1 ; et
attribuant une nouvelle valeur à $r_{norm}$ pour réduire l'erreur et en répétant le processus jusqu'à ce que au moins un critère de terminaison soit satisfait.

2. Procédé selon la revendication 1, dans lequel les données de points de cheminement comprennent des données de position, de cap, de courbure et d'inflexion.

3. Procédé selon l'une quelconque des revendications précédentes, dans lequel les données de points d'interpolation comprennent des données de position d'interpolation et au moins un parmi des données de cap, de courbure et/ou d'inflexion d'interpolation.

4. Procédé selon la revendication 3, dans lequel les données de points d'interpolation comprennent des données de position, de cap, de courbure et d'inflexion d'interpolation.

5. Procédé selon l'une quelconque des revendications précédentes, dans lequel le degré du polynôme est 6.

6. Procédé selon l'une quelconque des revendications précédentes, dans lequel le contrôleur de trajectoire détermine les données de point d'interpolation à l'aide de matrices de la forme générale :

$$\begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w+1) - (angle\ of\ r_{norm}) \\ (curvature\ at\ w+1) \times (modulus\ of\ r_{norm}) \\ (inflection\ at\ w+1) \times (modulus\ of\ r_{norm})^2 \end{bmatrix} = A \begin{bmatrix} n_{coeff,1} \\ n_{coeff,2} \\ n_{coeff,3} \\ n_{coeff,4} \\ n_{coeff,5} \\ n_{coeff,6} \end{bmatrix}$$

7. Procédé selon la revendication 6, dans lequel le contrôleur de trajectoire détermine les données de points d'interpolation en :

attribuant une valeur à $r_{norm}$,
déterminant les coefficients $n_{coeff,1}... n_{coeff,p}$ à l'aide de la matrice inverse $A^{-1}$ en utilisant des matrices de la forme générale :

$$\begin{bmatrix} n_{coeff,1} \\ n_{coeff,2} \\ n_{coeff,3} \\ n_{coeff,4} \\ n_{coeff,5} \\ n_{coeff,6} \end{bmatrix} = A^{-1} \begin{bmatrix} (heading\ at\ w) - (angle\ of\ r_{norm}) \\ (curvature\ at\ w) \times (modulus\ of\ r_{norm}) \\ (inflection\ at\ w) \times (modulus\ of\ r_{norm})^2 \\ (heading\ at\ w + 1) - (angle\ of\ r_{norm}) \\ (curvature\ at\ w + 1) \times (modulus\ of\ r_{norm}) \\ (inflection\ at\ w + 1) \times (modulus\ of\ r_{norm})^2 \end{bmatrix}$$

déterminant le cap, la courbure et l'inflexion de chaque point d'interpolation à l'aide des coefficients déterminés ;

déterminant la position de chaque point d'interpolation en substituant les coefficients déterminés dans le *polynôme* ;

déterminant l'erreur de position entre le point d'interpolation final et *waypoint w* + 1 ; et

attribuant une nouvelle valeur à $r_{norm}$ pour réduire l'erreur et en répétant le processus jusqu'à ce qu'un critère de terminaison soit satisfait.

**8.** Procédé selon l'une quelconque des revendications précédentes, dans lequel le critère de terminaison comprend un nombre prédéterminé de répétitions.

**9.** Système (1) de contrôle d'un véhicule (12), le système comprenant :

un support de stockage non transitoire lisible par ordinateur (127) ; et
un contrôleur de trajectoire (123) couplé de manière opérationnelle au support de stockage,

dans lequel le contrôleur de trajectoire est configuré pour obtenir des données de cheminement pour une série de points de cheminement (30) provenant du support de stockage et déterminer des données de points d'interpolation pour une série de points d'interpolation (31) définissant une trajectoire cible (32) pour le véhicule entre les points de cheminement,

dans lequel le contrôleur de trajectoire est configuré de sorte que le véhicule suive la trajectoire cible,

dans lequel les données de points de cheminement comprennent des données de position et de cap, de courbure et d'inflexion, ou dans lequel les données de points de cheminement comprennent des données de position et le procédé comprend l'utilisation du contrôleur de trajectoire afin de déterminer des données de cap, de courbure et d'inflexion à l'aide des données de points de cheminement,

dans lequel les données de courbure représentent des données de cap différenciées par rapport à la distance parcourue et les données d'inflexion représentent des données de courbure différenciées par rapport à la distance parcourue,

dans lequel le contrôleur de trajectoire détermine les données de points d'interpolation à l'aide d'une équation de la forme :

$$r(n_{par}) = r_{waypoint\ w} + r_{norm} \int_{waypoint\ w}^{waypoint\ w+1} e^{i(polynomial)}\ dn_{par}$$

où *r* représente la position du point d'interpolation,

$n_{par}$ représente une variable paramétrique proportionnelle à la distance parcourue entre le point de cheminement *w* et le point de cheminement *w* + 1,

$r_{waypoint\ w}$ représente la position du point de cheminement *w,*

$r_{norm}$ représente une constante,

*waypoint w et waypoint w* + 1 représentent les points de cheminement entre lesquels l'interpolation est effectuée ; et

où le *polynôme* représente un *polynôme* de la forme :

$$n_{coeff,p} n_{par}{}^{p} + n_{coeff,p-1} n_{par}{}^{p-1} + \cdots + n_{coeff,1} n_{par}$$

où $n_{coeff,\ p} \dots n_{coeff,\ 1}$ représentent des constantes et *p* représente le degré du polynome,

**caractérisé en ce que**
le contrôleur de trajectoire est configuré pour déterminer les données de point d'interpolation par une technique d'inversion de matrice,

dans lequel le contrôleur de trajectoire est configuré pour déterminer les données de points d'interpolation à l'aide de matrices de la forme générale :

$$\begin{bmatrix} a_1 \\ \vdots \\ a_x \end{bmatrix} = A \begin{bmatrix} n_{coeff,1} \\ \vdots \\ n_{coeff,p} \end{bmatrix}$$

où chacun des termes $a_1$... $a_x$ comprend $r_{norm}$, et

où $A$ représente une matrice qui est une fonction des limites de $n_{par}$, dans lequel le contrôleur de trajectoire est configuré pour déterminer les données de points d'interpolation en :

attribuant une valeur à $r_{norm}$,

déterminant les coefficients $n_{coeff,1}$... $n_{coeff,\,p}$ à l'aide de la matrice inverse $A^{-1}$ à l'aide de matrices de la forme générale :

$$\begin{bmatrix} n_{coeff,1} \\ \vdots \\ n_{coeff,p} \end{bmatrix} = A^{-1} \begin{bmatrix} a_1 \\ \vdots \\ a_x \end{bmatrix}$$

déterminant le cap, la courbure et l'inflexion de chaque point d'interpolation à l'aide des coefficients déterminés ;

déterminant la position de chaque point d'interpolation en substituant les coefficients déterminés dans le *polynôme,*

déterminant l'erreur de position entre le point d'interpolation final et le point de cheminement *waypoint w + 1* ; et

attribuant une nouvelle valeur à $r_{norm}$ afin de réduire l'erreur et en répétant le processus jusqu'à ce que au moins un critère de terminaison soit satisfait.

**10.** Produit de programme informatique ou support de stockage lisible par ordinateur comprenant des instructions qui, lorsqu'elles sont exécutées par un ordinateur, amènent celui-ci à mettre en oeuvre le procédé selon l'une quelconque des revendications 1 à 8.

**Fig. 1**

**Fig. 2**

**Fig. 3**

**Fig. 4**

**Fig. 5a**

**Fig. 5b**

302

Direction of iterative error correction

311

301

**Fig. 5c**

302

311

301

**Fig. 5d**

**EP 4 540 675 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020033871 A
- JP 2011145797 B
- CN 111459160